# EUROPEAN PATENT APPLICATION

(11) **EP 2 894 638 A1**
(43) Date of publication of application: **15.07.2015**
(21) Application number: 13834276.1
(22) Date of filing: 30.08.2013
(51) Int. Cl.: G21F 9/30, G21F 9/28, G21F 9/32

(54) **SOLIDIFIED RADIOACTIVE WASTE AND METHOD FOR MANUFACTURING SAME**

(30) Priority: 31.08.2012 JP 2012192123
(71) Applicant: Kabushiki Kaisha Toshiba, Minato-ku Tokyo 105-8001 (JP)
(72) Inventor: KAWANO, Shohei, Tokyo 105-8001 (JP); KAWAHARADA, Yoshiyuki, Tokyo 105-8001 (JP); OBATA, Masamichi, Tokyo 105-8001 (JP); HAYASHI, Hirotada, Tokyo 105-8001 (JP); HARUGUCHI, Yoshiko, Tokyo 105-8001 (JP); SAYANO, Akio, Yokohama-Shi, Kanagawa 230-0045 (JP)
(74) Representative: Granleese, Rhian Jane
(86) International application number: PCT/JP2013/073374
(87) International publication number: WO 2014/034875

(57) **Abstract**

Provided is a technique for solidifying radioactive waste, which enables stable final disposal of a large amount of radioactive waste with a simple process.

A method for producing a solidified body of radioactive waste includes: a step (S11) of retrieving radioactive waste generated at a nuclear power plant or a nuclear related facility, a step (S12) of pressurizing radioactive nuclides contained in the radioactive waste along with an inorganic adsorbent and thereby forming a molded body; and a step (S13) of firing the molded body and thereby forming a solidified body.

## Description

### Technical Field

The present invention relates to a technique for solidifying radioactive waste generated in a nuclear power plant or a nuclear related facility.

### Background Art

A nuclear power plant constitutes a circulation cycle in which light water is passed successively through a steam generator, a high pressure turbine, a low pressure turbine, a condenser, a feed water pump, and a feed water heater, thereafter being returned to the steam generator again.

Then, the high-pressure turbine and the low pressure turbine are driven by the steam generated by the steam generator to operate an electric generator, thereby performing power generation.

In a boiling water reactor power plant (BWR), light water is boiled in a reactor, and this reactor also serves as a steam generator.

If all the power supply of the BWR is lost by a large earthquake and tsunami, water supply to the reactor is stopped and it comes into a state of low-water heating, which may lead to melting of the core fuel or partial damage of a pressure vessel of the reactor.

If such a severe accident has occurred, to stably cool the decay heat of the core fuel, cooling water is supplied from the outside to the inside of the pressure vessel of the reactor.

If the pressure vessel of the reactor has been damaged at this moment, the supplied cooling water leaks from the damaged site. The leaked cooling water is contaminated by radioactive substances such as molten core fuel.

To purify the heavily-contaminated water which is thus generated in a large volume, removal of radionuclides by use of an adsorbent such as an inorganic adsorbent is performed.

Then, along with the purification treatment of those heavily contaminated water, radioactive waste such as adsorbents are generated secondarily. Since such secondary waste contains high-concentration radioactive cesium etc. and delivers a high radiation dose, it is necessary to solidify it into a stable form in order for intermediate storage and final disposal thereof in the long term.

As a known example for solidifying waste containing radioactive substance, there is disclosed a technique for producing a fired solidified body, comprising causing crushed synthetic mordenite and crushed synthetic A-type inorganic adsorbent to selectively adsorb cesium and/or strontium which is a radioactive isotope, subjecting the mixture to isotropic pressure molding by a rubber press at a constant pressure, and retaining it at a temperature of around 1200°C for long hours in an air atmosphere furnace (for example, Patent Document 1).

Moreover, there is disclosed a technique for forming a solidified body, comprising adding alkaline aqueous solution to ceramic waste containing radioactive substances, charging the mixture into a metal capsule, and subjecting the whole to hot hydrostatic pressurizing treatment (for example, Patent Document 2).

### Prior Art Documents

### Patent Document

Patent Document 1: Japanese Patent Publication No. 2807381
Patent Document 2: Japanese Patent Publication No. 3071513

### Summary of the Invention

### Problems to be Solved by the Invention

However, in the technique relating to Patent Document 1, there is concern that cesium adsorbed to an inorganic adsorbent may evaporate as firing is performed at a high temperature such as around 1200°C.

When firing and solidifying the inorganic adsorbent to which cesium of heavily contaminated water is adsorbed, it is desired to suppress the evaporation of radioactive cesium as much as possible, and reduce the contamination of the heating furnace.

In this connection, there is a report that when heated to and retained at 1200°C for 3 hours, the volatilization rate of cesium adsorbed to an inorganic adsorbent is from 0.02 to 0.22%.

Further, the technique relating to Patent Document 2 is not suitable for treatment of a large amount of waste, since large-scale machine facilities are needed to perform hot hydrostatic pressurizing treatment, and further such treatment requires long hours.

The present invention has been made in consideration of the above described circumstances, and has its object to provide a technique for solidifying radioactive waste, which enables stable final disposal of a large amount of radioactive waste with a simple process, and suppresses the volatilization of radioactive nuclides during the production of the solidified body.

### Brief Description of the Drawings

Fig. 1 is a flowchart showing an embodiment of a method for producing a solidified body of radioactive waste relating to the present invention.
Fig. 2 is a table showing measurement results of the shape (diameter and height), volume reduction ratio, density, and compression strength of solidified body when the conditions of firing temperature and press pressure are varied for an inorganic adsorbent mainly composed of chabazite.
Fig. 3 is a table showing measurement results of the shape (diameter and height), volume reduction ratio, density, and compression strength of solidified body when the conditions of firing temperature and press pressure are varied for an inorganic adsorbent mainly composed of crystalline silico-titanate.
Fig. 4 is a graph showing measurement results of the density of solidified body when conditions of the temperature and retention time at the time of firing are varied for an inorganic adsorbent mainly composed of chabazite.
Fig. 5 is a graph showing measurement results of the density of solidified body when conditions of the temperature and retention time at the time of firing are varied for an inorganic adsorbent mainly composed of crystalline silico-titanate.

### Description of Embodiments

### (First Embodiment)

Hereafter, embodiments of the present invention will be described based on the accompanying drawings.

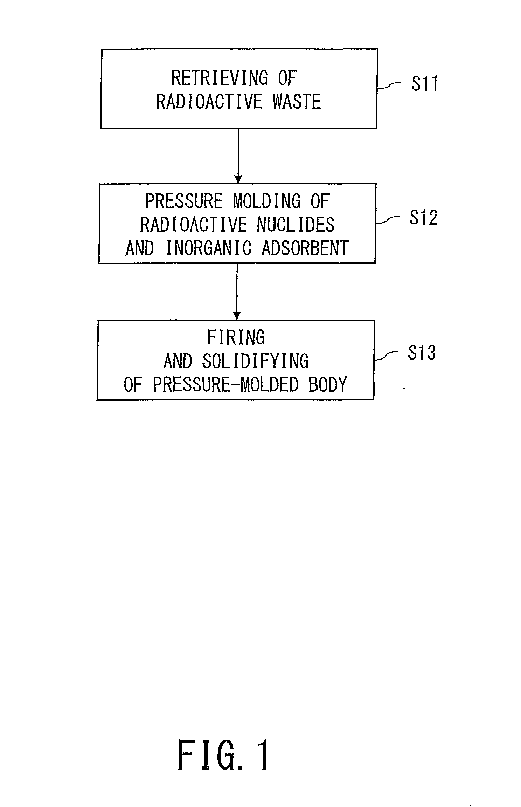

As shown in Fig. 1, a method for producing a solidified body of radioactive waste relating to a first embodiment includes: a step (S11) of retrieving radioactive waste generated at a nuclear power plant or a nuclear related facility, a step (S12) of pressurizing radioactive nuclides contained in the radioactive waste along with an inorganic adsorbent and thereby forming a molded body; and a step (S13) of firing the molded body and thereby forming a solidified body.

The radioactive waste generated at a nuclear power plant or a nuclear related facility contains nuclides caused by nuclear fission reaction of, for example, uranium or plutonium in a reactor, and nuclides resulting from radioactive decay thereof.

Since, among these radioactive nuclides, ¹³⁷Cs, which has a half-life of about 30 years, has properties to emit strong radiation and to reside in living bodies to easily be concentrated therein via a food chain, there is concern that living bodies are affected by exposure thereto for a relatively longer period.

For that reason, it is desired that the radioactive waste generated at nuclear power plants or nuclear related facilities is subjected to stabilization treatment so as not to leak into environment, and then to intermediate storage for a considerable period of time, and thereafter is buried in a final disposal site.

As the inorganic adsorbent, those mainly composed of chabazite or crystalline silico-titanate are suitably used. Further, without being limited thereto, any kind which has a property to adsorb radioactive nuclides, such as aluminosilicate, clinoptilolite, and herschelite can be used as the inorganic adsorbent.

The method for obtaining a molded body of an inorganic adsorbent is exemplified by a method for charging radioactive waste and the inorganic adsorbent in a mold, and subjecting them to uniaxial pressure-molding by a hydraulic press machine, etc.

The pressurizing force at this time is preferably set to be in a range of 0.9 to 1.5 ton/cm². If the pressurizing force is smaller than 0.9 ton/cm², the compression strength of the solidified body which is obtained by firing this molded body becomes insufficient, and if larger than 1.5 ton/cm², the machine facilities become upsized.

As the method for firing the molded body and thereby forming a solidified body, it is possible to adopt a firing condition in which the setting temperature of a heater such as an electric furnace or gas furnace is in a range of 700 to 900°C, the retention time is in a range of 1 to 4 hours, and the atmosphere is the ambient air.

Where, if the setting temperature is less than 700°C, the compression strength of the solidified body which is obtained by firing the molded body becomes insufficient, and if more than 900°C, a cesium salt which has relatively low melting and boiling points is evaporated.

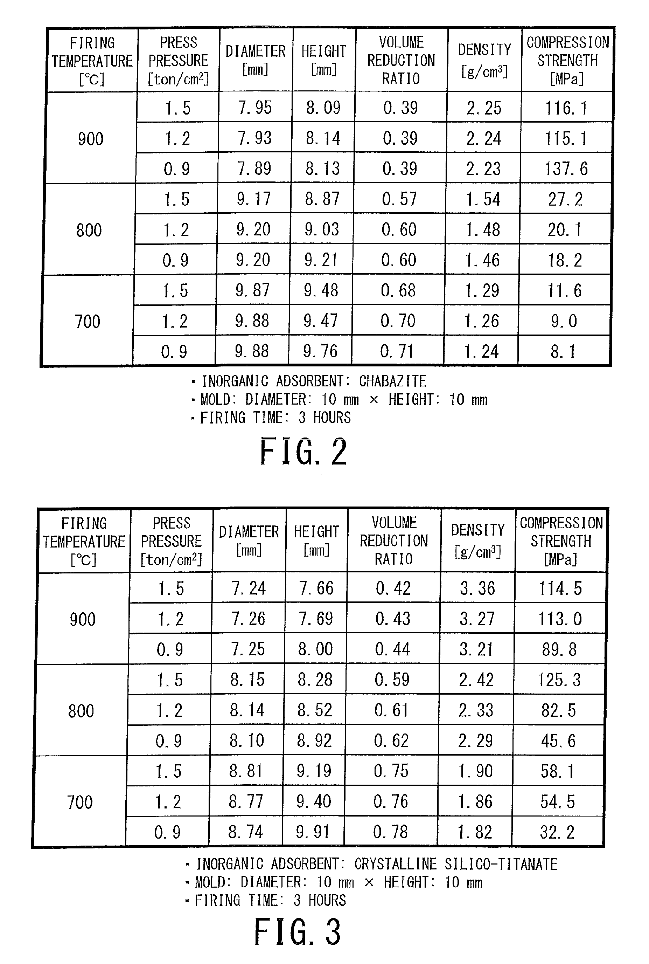

Fig. 2 is a table showing measurement results of the shape (diameter and height), volume reduction ratio (= volume of the fired solidified body/volume of raw material powder), density, and compression strength of solidified body when conditions of firing temperature and press pressure are varied for an inorganic adsorbent mainly composed of chabazite.

The mold used had a shape for fabricating a cylindrical molded body with a dimension of a diameter of 10 mm x a height of 10 mm. The fabrication conditions of solidified body were determined from three levels of the pressing pressure: 0.9, 1.2, and 1.5 ton/cm², and three levels of firing temperature: 700, 800, and 900°C, with the atmosphere being the ambient air and the retention time being 3 hours.

Then the dimensions of the fabricated solidified body were measured with a Vernier micrometer, obtaining the diameter and the height thereof. Moreover, density was calculated from the volume and weight of the solidified body, and thereby a volume reduction ratio was calculated.

From these test results, decreases in the diameter and height, and decline of volume reduction ratio due to sintering were observed at a temperature of not less than 700°C and a press pressure of not less than 0.9 ton/cm², and compression strength of not less than 8.1 MPa was measured.

Moreover, there is observed a tendency that as the retention temperature or the press pressure at the time of firing increases, the density and the compression strength increase. It is noted that the density of the inorganic adsorbent mainly composed of chabazite was 0.88 g/cm³ before it was formed into a molded body.

Fig. 3 is a table showing measurement results of the shape (diameter and height), volume reduction ratio, density, and compression strength of solidified body when conditions of firing temperature and press pressure are varied for an inorganic adsorbent mainly composed of crystalline silico-titanate.

The conditions for fabricating a molded body and solidified body, and the method for acquiring test results are similar to those in the case of the inorganic adsorbent mainly composed of chabazite as shown in Fig. 2.

In the inorganic adsorbent mainly composed of crystalline silico-titanate as well, decreases in the diameter and height due to firing at not less than 700°C and a press pressure of 0.9 ton/cm² and a decrease in the volume reduction ratio due to sintering were observed, and the compression strength of not less than 32.2 MPa was measured.

Moreover, there was observed a tendency that as the retention temperature at the time of firing or the press pressure increased, the density and compression strength increased. It is noted that the density of the inorganic adsorbent mainly composed of crystalline silico-titanate before it was formed into a molded body was 1.42 g/cm³.

From the above describe results, in the case of the inorganic adsorbent mainly composed of chabazite or crystalline silico-titanate, it was proved to be possible to increase the density of the inorganic adsorbent to 1.2 to 3.4 g/cm³, and to increase the compression strength to 8 to 120 MPa by pressure-molding the inorganic adsorbent at any retention pressure in a range of 0.9 to 1.5 ton/cm² and sintering it at any retention temperature in a range of 700 to 900°C in the ambient air atmosphere.

In view of the fact that the compression strength required for a cement solidified body in general radioactive waste is 1.6 MPa, it can be said that sufficient compression strength is obtained in an embodiment.

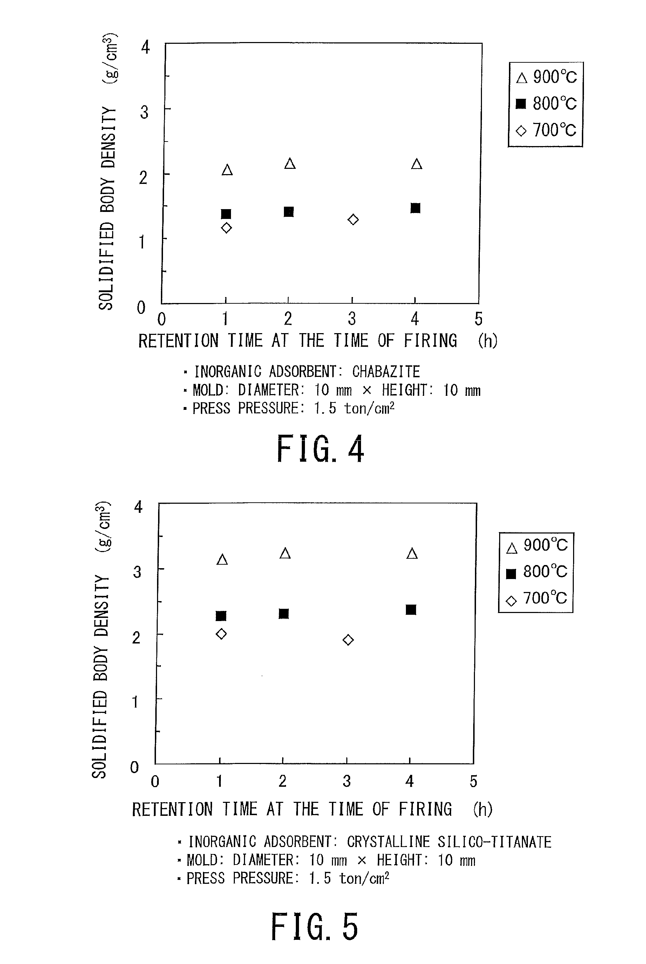

Fig. 4 is a graph showing measurement results of the density of solidified body when conditions of the temperature and retention time at the time of firing are varied for an inorganic adsorbent mainly composed of chabazite.

The mold used had a shape for fabricating a cylindrical molded body with a dimension of a diameter of 10 mm x a height of 10 mm. The fabrication conditions of solidified body were determined from four levels of retention time: 1, 2, 3, and 4 hours, and three levels of firing temperature: 700, 800, and 900°C, with the atmosphere being the ambient air and with the press pressure being 1.5 ton/cm².

Although it was observed that the density of solidified body respectively increased with respect to the firing temperatures of 700, 800, and 900°C, no significant change in the density was observed after retention of 2 to 4 hours, from which it was confirmed that sufficient solidification by firing was achieved by a retention time of not less than 1 hour.

Fig. 5 is a graph showing measurement results of the density of solidified body when conditions of the firing temperature and firing time are varied for an inorganic adsorbent mainly composed of crystalline silico-titanate.

The fabrication conditions of the molded body and the solidified body are similar to those in the case of the inorganic adsorbent mainly composed of chabazite as shown in Fig. 4.

Although, it was observed that the density of solidified body respectively increased with respect to the firing temperatures of 700, 800, and 900°C, no significant change in the density was observed after retention of 2 to 4 hours, from which it was confirmed that sufficient solidification by firing was achieved by a retention time of not less than 1 hour.

Next, it is to be verified if equivalent results as those of Figs. 2 to 5, which are obtained using a test piece, are brought about in a solidified body, which has a shape closer to an actual implementation.

First, 260 g of raw material powder of an inorganic adsorbent mainly composed of chabazite was charged into a mold having an opening with a rectangular shape of 100 mm x 100 mm, and was uniaxially pressure-molded by means of a hydraulic press machine which was set at a pressure of 1.5 ton/cm² to obtain a molded body with a dimension of 100 x 100 x 20 mm.

Then, the molded body was set in an electric furnace to fabricate a solidified body under the setting conditions of a firing temperature of 900°C, an atmosphere of ambient air, and a retention time of 3 hours.

As a result of that, the solidified body exhibited a dimension of 80 x 80 x 16 mm, a volume reduction ratio of 0.36, and a density of 2.4 g/cm³, and an average value of compression strength, which was measured on three test pieces collected from the solidified body, was 184.8 MPa.

Similarly, 260 g of raw material powder of an inorganic adsorbent mainly composed of crystalline silico-titanate was charged into a mold having an opening with a rectangular shape of 100 mm x 100 mm, and was uniaxially pressure-molded by means of a hydraulic press machine which was set at a pressure of 1.5 ton/cm² to obtain a molded body with a dimension of 100 x 100 x 20 mm.

Then, the molded body was set in an electric furnace to fabricate a solidified body under the setting conditions of a firing temperature of 900°C, an atmosphere of ambient air, and a retention time of 3 hours.

As a result of that, the solidified body exhibited a dimension of 74 x 74 x 14 mm, a volume reduction ratio of 0.39, and a density of 3.7 g/cm³, and an average value of compression strength, which was measured on three test pieces collected from the solidified body, was 102.4 MPa.

From these test results, it was found that equivalent or better results as those of Figs. 2 to 5, which were obtained using a test piece, were brought about in a solidified body, which had a shape closer to an actual implementation.

Thus, by pressure-molding the inorganic adsorbent and thereafter firing it in the ambient air, it is possible to produce a high-density solidified body at a high mass-productivity.

The produced solidified body has a shape of a cuboid or a cylinder, and is stored in a storage container made of metal so as to be piled up without space thereinside. After the solidified body is stored within the storage container in this way, the storage container is sealed tightly by fixing the lid by welding or bolting. Thus, it is possible to more stably shut-in radioactive waste.

The storage container to be applied to actual facilities is supposed to be one made of stainless steel and having a cuboid shape of about 430 x 430 x 1340 mm. By firing the solidified body in a cuboid shape, it becomes possible to pack many solidified bodies in the storage container without space.

Moreover, supposed as the storage container having another shape to be applied to actual facilities is one made of stainless steel and having a cylindrical shape with a dimension of an inner diameter of about 430 x a height of about 1340 mm.

By firing the solidified body in a cylindrical shape with a dimension of a diameter of about 420 mm x a height of about 20 mm, it becomes possible to pack a large number of solidified bodies without space in the storage container.

Since a solidified body, which is obtained by sintering an inorganic adsorbent which has adsorbed radioactive nuclides, has high radioactivity, storing and packing operations need to be performed by remote control. For that reason, a solidified body fired in a cuboid or cylinder shape also has an advantage that it can be easily handled and transported by a robot arm, etc.

It is noted that the shape of the storage container is not limited to the above described ones, the shape of the solidified body may be selected in accordance with the dimensions of the storage container for actual use.

Specifically, it is possible to change the dimensions of the solidified body by changing the dimensions and shape of the mold to be used at the time of pressure molding. It is also possible to control the dimensions of the final solidified body by taking account of shrinkage at the time of firing.

### (Second Embodiment)

Adding a binder of clay-based mineral to an inorganic adsorbent makes it possible to suppress cracking and chipping which occur in a solidified body, thereby improving the quality thereof.

It is noted that in the method for producing a solidified body of radioactive waste relating to a second embodiment, all the steps excepting the step of adding a binder are the same as those in the first embodiment.

Examples of the clay-based mineral to be applied include bentonite, halloysite, chrysotile, pyrophyllite, talc, muscovite, phlogopite, sericite, chlorite, beidellite, vermiculite, etc.

Adding 4% by weight ratio of bentonite (binder) to chabazite (inorganic adsorbent) and kneading the mixture with addition of a small amount of water with a kneader will give plasticity to the kneaded body, thereby improving moldability thereof at the time of pressure molding.

In order that such increase of plasticity will not cause the raw material powder to flow out from the mold during pressing, the pressure molding may be performed by setting the press pressure in a range of 0.3 to 0.6 ton/cm².

Thus fabricated molded body having a dimension of 100 x 100 x 40 mm was dried in the ambient air, and was thereafter sintered at 900°C for 3 hours, as a result of which a solidified body free from cracking was obtained.

Similarly, the case in which crystalline silico-titanate is used as the inorganic adsorbent is considered.

In this case, 2 to 4% by weight ratio of bentonite was added to crystalline silico-titanate, and the mixture was pressure-molded by setting the press pressure in a range of 0.3 to 0.6 ton/cm².

Thus fabricated molded body having a dimension of 100 x 100 x 40 mm was dried in the ambient air, and was thereafter sintered at 900°C for 3 hours, as a result of which a solidified body free from cracking was obtained as in the case of chabazite.

According to a method for producing a solidified body of radioactive waste according to at least one of the embodiments descried above, it becomes possible to perform stable final disposal of a large amount of radioactive waste with a simple process, and also suppress the volatilization of radioactive nuclides at the time of production of the solidified body, by pressurizing the inorganic adsorbent along with radioactive nuclides to form a molded body, and thereafter firing the same to form a solidified body.

Although several embodiments of the present invention have been described, these embodiments are presented by way of examples, and are not intended to limit the scope of the invention. These embodiments can be practiced in various other forms, and various omissions, substitutions, modifications, and combinations thereof may be made within a range not departing from the spirit of the present invention. It is intended that these embodiments and variants thereof are included in the scope and spirit of the present invention, as well as in the inventions in the claims and equivalents thereof.

## Claims

1. A method for producing a solidified body of radioactive waste, comprising the steps of:
retrieving radioactive waste generated at a nuclear power plant or a nuclear related facility,
pressurizing radioactive nuclides contained in the radioactive waste along with an inorganic adsorbent and thereby forming a molded body; and
firing the molded body and thereby forming a solidified body.

2. The method for producing a solidified body of radioactive waste according to claim 1, wherein
the solidified body has a shape of a cuboid or a cylinder.

3. The method for producing a solidified body of radioactive waste according to claim 2, further comprising a step of
storing the solidified body in a storage container made of metal.

4. The method for producing a solidified body of radioactive waste according to claim 1, wherein
the inorganic adsorbent is mainly composed of chabazite or crystalline silico-titanate.

5. The method for producing a solidified body of radioactive waste according to claim 1, wherein
pressurizing force in the step of forming the molded body is set to be in a range of 0.9 to 1.5 ton/cm².

6. The method for producing a solidified body of radioactive waste according to claim 1, wherein
a firing condition in the step of forming the solidified body is arranged such that a setting temperature is in a range of 700 to 900°C, a retention time is in a range of 1 to 4 hours, and an atmosphere is ambient air.

7. The method for producing a solidified body of radioactive waste according to claim 1, further comprising a step of
adding a binder of clay-based mineral to the inorganic adsorbent, prior to the step of forming the molded body.

8. A solidified body of radioactive waste, wherein the solidified body is produced by the method for producing a solidified body of radioactive waste according to claim 1, and has a compression strength in a range of 8 to 120 MPa.

9. The solidified body of radioactive waste according to claim 8, wherein
the solidified body has a density in a range of 1.2 to 3.4 g/cm³.
